# EUROPÄISCHE PATENTSCHRIFT

(11) **EP 4 188 765 B1**
(45) Veröffentlichungstag und Bekanntmachung des Hinweises auf die Patenterteilung: **31.07.2024**
(21) Anmeldenummer: 21737615.1
(22) Anmeldetag: 28.06.2021
(51) Int. Cl.: B60W 10/113, B60W 20/40, B60K 6/48, B60K 6/547, B60K 6/387, B60K 6/26

(54) **VERFAHREN ZUM STARTEN EINES VERBRENNUNGSMOTORS IN EINEM ANTRIEBSSTRANG MIT HYBRIDISIERTEM DOPPELKUPPLUNGSGETRIEBE**
METHOD FOR STARTING AN INTERNAL COMBUSTION ENGINE IN A DRIVETRAIN COMPRISING A HYBRIDISED DUAL-CLUTCH TRANSMISSION
PROCÉDÉ SERVANT AU DÉMARRAGE D'UN MOTEUR À COMBUSTION INTERNE DANS UNE CHAÎNE CINÉMATIQUE CONSISTANT EN UNE TRANSMISSION À DOUBLE EMBRAYAGE HYBRIDÉE

(30) Priorität: 27.07.2020 DE 102020209452
(43) Veröffentlichungstag der Anmeldung: 07.06.2023
(73) Patentinhaber: Magna PT B.V. & Co. KG, 74199 Untergruppenbach (DE)
(72) Erfinder: OTT, Mario, 70825 Korntal-Münchingen (DE)
(74) Vertreter: Rausch, Gabriele
(86) Internationale Anmeldenummer: PCT/EP2021/067724
(87) Internationale Veröffentlichungsnummer: WO 2022/022926

(56) Entgegenhaltungen:
- EP-A1- 2 511 147
- EP-A2- 2 457 760
- DE-A1- 102010 004 711

## Beschreibung

Die Erfindung geht aus von einem Verfahren zum Starten eines Verbrennungsmotors in einem Antriebsstrang mit hybridisiertem Doppelkupplungsgetriebe mit zwei Kupplungen und zwei Teilgetrieben, wobei eine elektrische Maschine an ein Teilgetriebe angebunden ist, und der Verbrennungsmotor über mindestens zwei Kupplungen mit beiden Teilgetrieben verbindbar ist, wobei ausgehend von einem rein elektrischen Fahrbetrieb über das eine Teilgetriebe und einer ersten Gangstufe der Verbrennungsmotor gestartet wird, wobei die Antriebsleistung der elektrischen Maschine über beide Kupplungen auf das nicht elektrifizierte Teilgetriebe übertragen wird.

### Stand der Technik

Fahrzeuge mit einer hybriden Antriebsstruktur weisen einen Verbrennungsmotor und ein zweites Antriebsaggregat auf, welches beispielsweise ein Elektromotor sein kann. So kann das Antriebsmoment während des Fahrbetriebes des Hybridfahrzeuges von beiden Antriebsaggregaten aufgebracht werden.

Aus der DE 10 2008 040 692 A1 ist ein Verfahren zum Anfahren eines solchen Hybridfahrzeuges bekannt, welches eine elektrische Maschine und ein Verbrennungsmotor aufweist, wobei die elektrische Maschine auf einem zweiten Teilgetriebe eines zwei Teilgetriebe aufweisenden Doppelkupplungsgetriebes angeordnet ist, wobei beim Anfahren des Hybridfahrzeuges mit der elektrischen Maschine der Verbrennungsmotor gestartet wird, ohne dass die an einem das Doppelkupplungsgetriebe enthaltenden Antriebsstrang anliegende Spannung unterbrochen wird.

Aus der DE 10 2019 220 191 A1 ist ein Verfahren zum Starten eines Verbrennungsmotors in einem Antriebsstrang mit hybridisiertem Doppelkupplungsgetriebe mit zwei Kupplungen und zwei Teilgetrieben bekannt, wobei eine elektrische Maschine an das eine elektrifizierte Teilgetriebe angebunden ist, und der Verbrennungsmotor über mindesten zwei Kupplungen mit beiden Teilgetrieben verbindbar ist, wobei ausgehend von einem rein elektrischen Fahrbetrieb über das Teilgetriebe und einer ersten Gangstufe des elektrifizierten Teilgetriebes der Verbrennungsmotor gestartet wird, wobei die Antriebsleistung der elektrischen Maschine EM über beide Kupplungen auf das nicht elektrifizierte Teilgetriebe übertragen wird, und das elektrifizierte Teilgetriebe neutral geschaltet wird, während das nichtelektrifizierte Teilgetriebe in einer zweiten Gangstufe betrieben wird.

Dabei ist unter der ersten und der zweiten Gangstufe zu verstehen, dass eine Auswahl für eine Gangstufe für jedes der Teilgetriebe, im Sinnen einer anderen Gangstufe, getroffen wird. Es heißt nicht, dass es dem ersten Gang und dem zweiten Gang eines Getriebes entspräche, entsprechend einer konventionellen Anordnung von Untersetzung in niedrigen bis zu einer Übersetzung in hohen Gängen.

In einer Version des Antriebsstrangs wird einen zusätzliche Trennkupplung verwendet, um den Verbrennungsmotor unabhängig vom Hybridantriebssystem betreiben zu können.

Aus der DE 10 2017 214 396 A1 ist ein Hybrid-Antriebsstrang mit Doppelkupplung bekannt, das auch eine Trennkupplung K0 zwischen Verbrennungsmotor und Getriebe verwendet. Darin wird ein Verfahren zum Starten des Verbrennungsmotors beschrieben, bei dem Energie über die Trennkupplung vom elektrischen Betrieb auf den Verbrennungsmotor übertragen wird.

Aus der unveröffentlichten DE 10 2020 202 139 ist ein Hybridantriebsstrang mit einem ein Trennelement zwischen Getriebe mit Getriebekupplungen und Verbrennungsmotor bekannt, das zumindest teilweise innerhalb einer Kupplungseingangsnabe der Doppelkupplung angebracht ist. Das Trennelement weist einen Synchronring auf, so dass das Trennelement erst reibschlüssig und in seiner Endlage formschlüssig geöffnet ist.

DE 10 2010 004 711 A1 zeigt ein Verfahren zum Starten eines Verbrennungsmotors in einem Antriebsstrang mit hybridisiertem Doppelkupplungsgetriebe mit zwei Kupplungen und zwei Teilgetrieben, wobei eine elektrische Maschine an ein elektrifiziertes Teilgetriebe angebunden ist, und der Verbrennungsmotor über eine Kupplung und über zwei mit beiden Teilgetrieben verbindbar ist, wobei ausgehend von einem rein elektrischen Fahrbetrieb über das elektrifizierte Teilgetriebe und eine eingelegte Gangstufe im elektrifizierten Teilgetriebe der Verbrennungsmotor gestartet wird, wobei die Antriebsleistung der elektrischen Maschine über beide Kupplungen auf das nicht elektrifizierte Teilgetriebe übertragen wird, wobei die Kupplung des elektrifizierten Teilgetriebes geschlossen ist und die Kupplung des nicht elektrifizierten Teilgetriebes im Schlupf und die Kupplung im Reibschluss betrieben wird, wodurch der Verbrennungsmotor auf Gleichlaufdrehzahl beschleunigt wird und die Kupplung reibschlüssig geschlossen wird, nachdem die beiden Kupplungen für die Teilgetriebe zumindest teilweise geschlossen wurden.

Es ist Aufgabe der Erfindung, das Problem des Startens eines Verbrennungsmotors bei kleinsten Fahrzeuggeschwindigkeiten sowie den weiteren Antriebsverlauf mit Hilfe eines speziellen Ablaufs zu optimieren.

### Beschreibung der Erfindung

Die Erfindung betrifft ein Verfahren zum Starten eines Verbrennungsmotors in einem Antriebsstrang mit hybridisiertem Doppelkupplungsgetriebe mit zwei Kupplungen und zwei Teilgetrieben, wobei eine elektrische Maschine an das eine elektrifizierte Teilgetriebe angebunden ist, und der Verbrennungsmotor über eine Trennelement und mindesten zwei Kupplungen mit beiden Teilgetrieben verbindbar ist, wobei ausgehend von einem rein elektrischen Fahrbetrieb über das Teilgetriebe und einer ersten Gangstufe des elektrifizierten Teilgetriebes der Verbrennungsmotor gestartet wird, wobei Kupplung K0 eine Sperrsynchronisation aufweist und in einer Kupplungsnabe integriert ist.

Die Aufgabe wird erfindungsgemäß mit einem Verfahren gelöst, welches die in Anspruch 1 angegebenen Merkmale aufweist.

Dabei ist unter der ersten und der zweiten Gangstufe zu verstehen, dass eine Auswahl für eine Gangstufe für jedes der Teilgetriebe, im Sinnen einer anderen Gangstufe, getroffen wird. Es heißt nicht, dass es dem ersten Gang und dem zweiten Gang eines Getriebes entspräche, entsprechend einer konventionellen Anordnung von Untersetzung in niedrigen bis zu einer Übersetzung in hohen Gängen.

Im Aufbau des Antriebsstrangs wird eine Trennkupplung als Sperrsynchronisierung ausgeführt verwendet, um den Verbrennungsmotor unabhängig vom Hybridantriebssystem betreiben zu können.

Durch Verwendung der Trennkupplung kann das Einstellen der Drehzahlen von elektrischer Maschine und Verbrennungsmotor unabhängig voneinander erfolgen.

Zum Starten des Verbrennungsmotors ist die Kupplung des elektrifizierten Teilgetriebes zunächst geschlossen und die Kupplung des nicht elektrifizierten Teilgetriebes im Schlupf, um die Drehzahl von elektrischer Maschine und Verbrennungsmotor unabhängig von der Fahrzeuggeschwindigkeit einstellen zu können. Dies ist Voraussetzung, um auch bei kleinsten Fahrzeuggeschwindigkeiten den Verbrennungsmotor auf eine Mindestdrehzahl mithilfe der elektrischen Maschine anschleppen zu können bei Aufrechterhaltung der Abtriebsleistung. Nachdem an der elektrischen Maschine eine definierte Drehzahlschwelle erreicht wurde, kann das Trennelement im reibschlüssigen Betrieb den Verbrennungsmotor auf eine Drehzahl anschleppen. Diese Drehzahl muss über der Zünddrehzahl liegt. Sobald diese Drehzahlschwelle erreicht wurde kann die Getriebesteuerung das Trennelement öffnen und dem Verbrennungsmotor die Startfreigabe erteilen. In der Phase des Öffnens wird das Drehmoment am Trennelement bis auf 0 reduziert, wodurch die Drehzahl des noch unbefeuerten Verbrennungsmotors fällt. Die zuvor erwähnten Drehzahlschwellen müssen derart gewählt werden, dass zum Zeitpunkt der Startfreigabe die Drehzahl am Verbrennungsmotor noch oberhalb der Zünddrehzahl liegt.

Parallel zum Verbrennungsmotorstart wird die elektrische Maschine durch Einlegen eines Gangs im elektrifizierten Teilgetriebe und durch Öffnen der Trennkupplungen K1 und K2 wieder formschlüssigen an den Abtrieb angebunden.

Nachdem beide Kupplungen K1 und K2 geöffnet wurden, kann die Trennkupplung den Verbrennungsmotor und die Kupplungsprimärseite zunächst reib- und in Endlage formschlüssig miteinander verbinden.

### Beispiel der Erfindung

Die Erfindung wird mit den Figuren und der nachfolgenden Beschreibung näher erläutert.
Figur 1 zeigt einen Antriebsstrang mit den unterschiedlichen Leistungswegen in einer beispielhaften Ausführungsform,
Figur 2 zeigt ein Diagramm der Parameter des Antriebsstranges mit TG1 als elektrifizierten Getriebeteil.

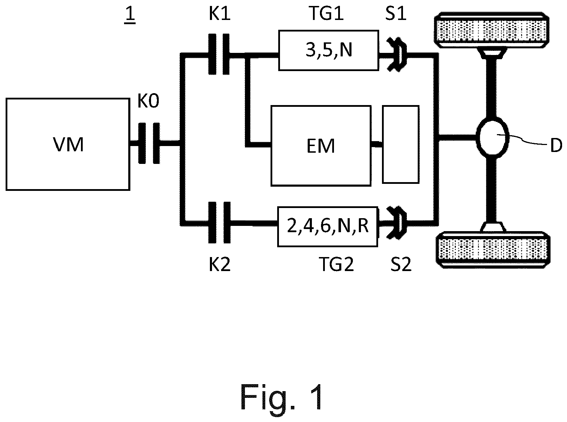

Die Figur 1 zeigt einen beispielhaften Antriebsstrang 1, wie er aus dem Stand der Technik bekannt ist. Ein Verbrennungsmotor VM treibt ein Getriebe 2 mit zwei Teilgetriebe TG1 und TG 2 und zwei Schaltkupplungen S1, S2, wobei die Teilgetriebe TG1 und TG2 über Kupplungen K1 und K2 vom Verbrennungsmotor VM, genauer von der Getriebeeingangswelle entkoppelbar sind. Zusätzlich trennt eine Kupplung K0 als Trennelement den Verbrennungsmotor VM vom Getriebe 2.

Getriebeausgangsseitig mündet der Antriebsstrang aus beiden Teilgetrieben an einem Differential D. Am Teilgetriebe TG1 ist die elektrische Maschine EM angekoppelt.

Das erfindungsgemäße Verfahren startet mit einem Fahrzustand, in dem allein die elektrische Maschine EM das Fahrzeug antreibt. Der Verbrennungsmotor VM steht still und ist noch nicht gezündet. Der Verbrennungsmotor VM ist über beide geöffneten Kupplungen K1 und K2, sowie über die geöffnete Kupplung K0 vom Rest des Antriebsstranges abgekoppelt. Im Teilgetriebe TG1 ist für den rein elektrischen Antrieb mit der elektrischen Maschine EM der dritte Gang eingelegt. Die Schaltkupplung S1 ist dabei geschlossen. Damit fließt die Antriebsenergie von der elektrischen Maschine EM über das Teilgetriebe TG 1 mit der Gangstufe 3 auf das Differential D.

Im Teilgetriebe TG2, das nicht mit der elektrischen Maschine EM direkt verbunden ist, ist während der rein elektrischen Fahrt der Gang der vierten Gangstufe eingelegt und die Kupplung K2, sowie die Schaltkupplung S2 geöffnet.

Der Verbrennungsmotor VM ist über eine Kupplung K0 mit den beiden Getriebeeingängen jeweils mit der Eingangswelle 1 und der Eingangswelle 2 verbunden. Die Kupplung K0 ist als Trennelement mit einer Sperrsynchronisation ausgelegt. Bevorzugt ist dabei eine Auslegung wie im oben zitierten Stand der Technik dargestellt. Eine solche in der Kupplungsnabe integrierte Trennkupplung ist extrem bauraumsparend. Ein solche räumlich begrenzte Trennkupplung K0 ist nicht allein über eine Reibkupplung umzusetzen. Um den Verbrennungsmotor VM sicher anzubinden wird eine Sperrsynchronisationslösung gewählt.

Die Sperrsynchronisation kann unterschiedlich ausgeführt sein. Die Sperrsynchronisation muss Gleichlauf zwischen der Vorverzahnung einer Komponente und einer Schaltmuffe herstellen. Solange dieser Gleichlauf nicht erreicht ist, soll sie der Schaltmuffe den Eingriff in die Vorverzahnung sperren. Bei ungleicher Drehzahl stellt sich der Synchronkörper der Schaltmuffe in den Weg und verhindert eine formschlüssige Verbindung.

Das Starten des Verbrennungsmotors VM kann unter bestimmten Umständen, z. B bei kleinen Fahrzeuggeschwindigkeiten mithilfe des Trennelements, der Kupplung K0 erfolgen. Hierzu wird die Kupplung K0 geschlossen und überträgt zunächst reibschlüssig ein Drehmoment, wodurch der Verbrennungsmotor VM bis auf Gleichlaufdrehzahl beschleunigt wird. In der folgenden Phase wird der Verbrennungsmotor formschlüssig mit dem Getriebe 2 gekoppelt, indem die Kupplung K0 bis in Endlage geschlossen wird. Die Phase zwischen reibschlüssiger und formschlüssiger Phase wird Freiflugphase genannt, da kurzzeitig keine mechanische Verbindung zwischen den beiden zu synchronisierenden Seiten besteht.

Erst wenn der Verbrennungsmotor VM formschlüssig mit dem Getriebe verbunden ist, die Kupplung K0 also voll geschlossen ist, darf dieser zünden und somit Drehmoment stellen.

Während der Freiflugphase kann sich eine Differenz in der Drehzahl zwischen Verbrennungsmotor VM und der Verbindungskomponenten z.B. einer Kupplungseingangsnabe aufbauen.

Im Resultat führt das zu einer hohen mechanischen Belastung beim Eindocken der - beispielhaften - Klauenverzahnung, was auch zu Geräuschen beim Verbinden führt.

Die Verdrehkapazität der Klauenverzahnung muss so ausgelegt sein, dass der Verbrennungsmotor VM entgegen dessen Schleppmoment verdreht werden kann. Dies muss bei der Auslegung berücksichtigt werden und hat Auswirkungen auf das Design.

Ist das Schleppmoment des Verbrennungsmotors größer als die Verdrehkapazität der Klauenverzahnung, kann ein sicheres Ankoppeln des Verbrennungsmotors nicht gewährleistet werden.

Um diese Situation zu verbessern, wird das im Weiteren beschriebene Verfahren angewendet.

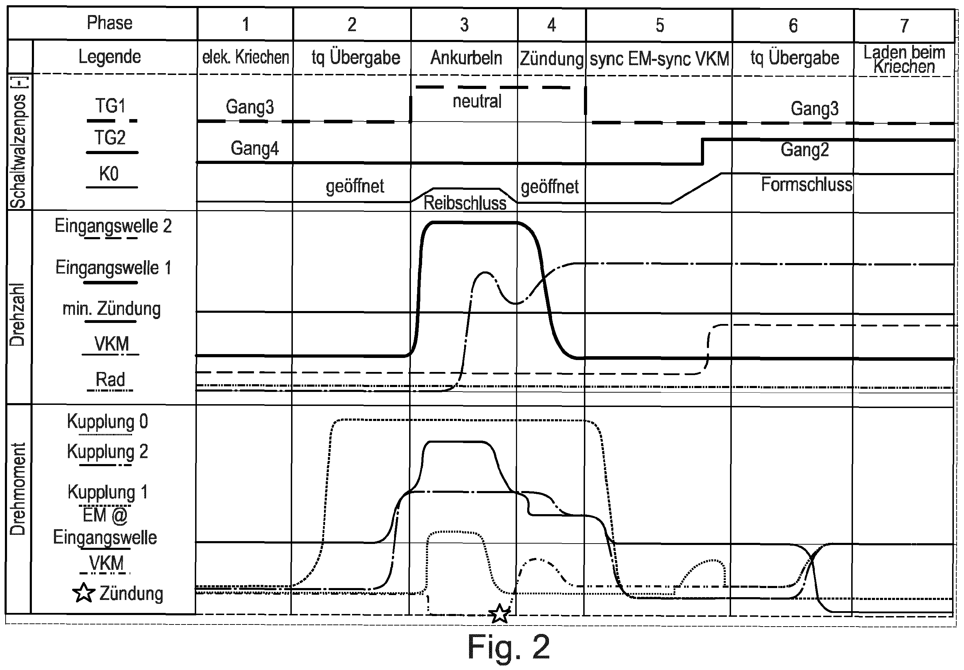

Der Verlauf der Ansteuerung der Komponenten ist in Figur 2 dargestellt.

In der Figur 2 sind in unterschiedlichen Graphen der Ablauf des Starts des Verbrennungsmotors und das Verfahren zum Antreiben des Fahrzeugs mit der in der Figur 1 gezeigten Getriebevariante wiedergegeben.

Das Verfahren beginnt mit der Anforderung den Verbrennungsmotor VM zu starten, was beispielsweise bei einem niedrigen Batterieladungstand der Fall ist.

Beginnend von oben ist in der Figur 2 der Verlauf der Gangeinstellung als Schaltwalzenposition über der Zeit dargestellt. Dabei ist gezeigt, dass die elektrische Maschine EM im Teilgetriebe TG1 in der dritten Gangstufe betrieben wird, dann auf neutral geschaltet wird, um dann final in der dritten Gangstufe betrieben zu werden. Das Teilgetriebe TG2 dagegen verbleibt zunächst in der vierten Gangstufe, um dann in der zweiten Gangstufe betrieben zu werden. Der unterste Graph im obersten Abschnitt beschreibt den Verlauf der Kupplung K0 über der Zeit. Bis zur Neutralschaltung des ersten Teilgetriebes TG1 ist die Kupplung K0 geöffnet und wird während der Neutralschaltung bis zum Reibschluss geschlossen und noch während der Neutralschaltung wieder geöffnet. Der Formschluss erfolgt nach der Synchronisation.

In der mittleren Darstellung der der Figur 2 sind die Verläufe der Drehzahlen der unterschiedlichen Komponenten des Antriebsstrangs über der Zeit dargestellt.

Die beiden Getriebeeingangswellen des Doppelkupplungsgetriebes 2 drehen mit unterschiedlichen Drehzahlen n1 und n2. Der Verlauf der Drehzahlen über der Zeit ist für die Eingangswelle 2 des zweiten Teilgetriebes TG2 linear bis zum Gangwechsel, für die Eingangswelle 1 des ersten Teilgetriebes TG1 wird der Verlauf dagegen durch die Kupplung K0 und das Zünden des Verbrennungsmotors beeinflusst, was später im Detail beschrieben wird.

Weiterhin ist die Drehzahl des Verbrennungsmotors VM dargestellt.

Die unterste Drehzahlkurve stellt die Raddrehzahl dar, die kontinuierlich linear ist. Weiterhin ist der konstante Verlauf der Zünddrehzahl dargestellt.

Im unteren Bereich der der Figur 2 sind die Drehmomente über der Zeit dargestellt.

Das Verfahren beginnt mit rein elektrischen Kriechen in Phase 1 im Teilgetriebe TG1, wobei beide Kupplungen der Teilgetriebe offen sind. Die Eingangswellendrehzahl der Eingangswelle 1 reicht aber nicht aus, um den Verbrennungsmotor zu starten.

In Phase 2 wird die Drehmomentübergabe vorbereitet, um die Leistung der elektrischen Maschine EM auf das andere Teilgetriebe, im Beispiel auf das zweite Teilgetriebe TG2 zu übertragen.

Dazu wird zunächst die Kupplung K1 geschlossen. Kurz vor dem Zeitpunkt, an dem der dritte Gang im Teilgetriebe TG1 ausgelegt wird, wird das Drehmoment der elektrischen Maschine EM erhöht. Die Kupplung K2 wird zusätzlich teilweise geschlossen und in Schlupf betrieben.

In der Phase 3 erreicht die Kupplung K2 ihr angestrebtes Drehmomentniveau und das Drehmoment der elektrischen Maschine EM wird weiter erhöht. Gleichzeitig mit dem Ansteigen des Drehmoments der elektrischen Maschine EM wird das Trennelement, die Kupplung K0 bis zum Reibschluss geschlossen. Drehzahl der elektrischen Maschine EM wird so weit erhöht, dass ein Starten über die Sperrsynchronisation möglich ist und zu jedem Zeitpunkt sichergestellt werden kann, dass die Sperrbedingung an der Sperrsynchronisation nicht verletzt wird. Das Drehmoment des Verbrennungsmotors VM verläuft in dieser Phase des Reibschlusses der Kupplung K0 entgegen dessen Schleppmoment.

Die Kupplung K0 wird kurzzeitig geschlossen, um den Verbrennungsmotor VM anzureißen. Die Drehzahl der elektrischen Maschine EM ist so zu wählen, dass zu keinem Zeitpunkt die Sperrbedingung an der Sperrsynchronisation verletzt wird.

In der Phase 4 direkt nach der Zündung des Verbrennungsmotors VM ist die Kupplung K0 vollständig geöffnet. Der Verbrennungsmotor VM spritzt ein und ist selbstlauffähig. Die Drehzahl nimmt vor der Zündung durch das Öffnen der Kupplung K0 zunächst etwas ab, um dann mit der Zündung anzusteigen und sich auf dem Sollwert zu regeln. Das Drehmoment der elektrischen Maschine EM wird weiter zurückgenommen und die schlupfende Kupplung K2 auf eine geringe Drehmomentübertragung geregelt.

In der Phase 5 wird die Drehzahl der elektrischen Maschine EM auf den dritten Gang synchronisiert und dieser eingelegt, beide Kupplungen K1 und K2 sind geöffnet. Die Kupplung K0 wird geschlossen bis die formschlüssige Endlage erreicht ist.

In der Phase 6 regelt der Verbrennungsmotor VM Leerlaufdrehzahl ein, während das Drehmoment am Verbrennungsmotor VM erhöht wird. Gleichzeitig wird das Drehmoment der elektrischen Maschine EM reduziert und die Kupplung K2 geschlossen.

Während der Phase 8 ist ein Laden der Batterien während des Kriechens mit dem Verbrennungsmotor VM möglich. Dazu wird über den Abtrieb des Teilgetriebes TG2 und einer geschlossenen Schaltkupplung S1 Drehmoment auf das Teilgetriebe TG1 und die elektrische Maschine EM gegeben und die elektrische Maschine EM als Generator betrieben.

## Patentansprüche

1. Verfahren zum Starten eines Verbrennungsmotors (VM) in einem Antriebsstrang (1) mit hybridisiertem Doppelkupplungsgetriebe mit zwei Kupplungen (K1, K2) und zwei Teilgetrieben (TG1, TG2), wobei eine elektrische Maschine (EM) an ein elektrifiziertes Teilgetriebe angebunden ist, und der Verbrennungsmotor (VM) über eine Kupplung (K0) und über beide Kupplungen (K1, K2) mit beiden Teilgetrieben (TG1, TG2) verbindbar ist, wobei ausgehend von einem rein elektrischen Fahrbetrieb über das elektrifizierte Teilgetriebe und eine eingelegte Gangstufe im elektrifizierten Teilgetriebe der Verbrennungsmotor (VM) gestartet wird, wobei die Antriebsleistung der elektrischen Maschine (EM) über beide Kupplungen (TG1, TG2) auf das nicht elektrifizierte Teilgetriebe übertragen wird, wobei die Kupplung (K1, K2) des elektrifizierten Teilgetriebes geschlossen ist und die Kupplung (K1, K2) des nicht elektrifizierten Teilgetriebes im Schlupf und die Kupplung (K0) im Reibschluss betrieben wird, wodurch der Verbrennungsmotor (VM) auf Gleichlaufdrehzahl beschleunigt wird und die Kupplung (K0) reibschlüssig geschlossen wird, nachdem die beiden Kupplungen (K1, K2) für die Teilgetriebe (TG1, TG2) zumindest teilweise geschlossen wurden, **dadurch gekennzeichnet, dass** die Kupplung K0 eine Sperrsynchronisation aufweist und in einer Kupplungsnabe integriert ist und dass das Schließen gleichzeitig mit einem Anstieg des Drehmoments der elektrischen Maschine (EM) erfolgt und das Drehmoment der elektrischen Maschine (EM) mit dem Schließen, bzw. mit dem teilweisen Schließen der Kupplungen (K1, K2, K0) erhöht wird und die Kupplung (K0) geöffnet wird, nachdem die Drehzahl des Verbrennungsmotors (VM) einen Sollwert erreicht und die Kupplung (K0) formschlüssig geschlossen wird, nachdem beide Kupplungen (K1 K2) der Teilgetriebe (TG1, TG2) geöffnet sind.

## Claims

1. Method for starting an internal combustion engine (VM) in a drivetrain (1) comprising a hybridised dual-clutch transmission with two clutches (K1, K2) and two sub-transmissions (TG1, TG2), an electric machine (EM) being attached to an electrified sub-transmission, and it being possible for the internal combustion engine (VM) to be connected via a clutch (K0) and via the two clutches (K1, K2) to the two sub-transmissions (TG1, TG2), the internal combustion engine (VM) being started, proceeding from purely electric travel operation, via the electrified sub-transmission and an engaged gear stage in the electrified sub-transmission, the drive power of the electric machine (EM) being transmitted via the two clutches (TG1, TG2) to the non-electrified sub-transmission, the clutch (K1, K2) of the electrified sub-transmission being closed, and the clutch (K1, K2) of the non-electrified sub-transmission being operated in slipping mode and the clutch (K0) being operated in frictionally locked mode, as a result of which the internal combustion engine (VM) is accelerated to synchronization rotational speed and the clutch (K0) is closed in a frictionally locking manner, after the two clutches (K1, K2) for the sub-transmissions (TG1, TG2) have been closed at least partially, **characterized in that** the clutch (K0) has a blocking synchronization means and is integrated in a clutch hub, and **in that** the closure takes place at the same time as a rise in the torque of the electric machine (EM), and the torque of the electric machine (EM) is increased as the clutches (K1, K2, K0) are closed or are partially closed, and the clutch (K0) is opened after the rotational speed of the internal combustion engine (VM) reaches the setpoint value, and the clutch (K0) is closed in a positively locking manner after the two clutches (K1, K2) of the sub-transmissions (TG1, TG2) are open.

## Revendications

1. Procédé permettant de faire démarrer un moteur à combustion interne (VM) dans une chaîne cinématique (1) comprenant une boîte de vitesses à double embrayage hybridée, pourvue de deux embrayages (K1, K2) et de deux demi-boîtes de vitesses (TG1, TG2), une machine électrique (EM) étant rattachée à une demi-boite de vitesses électrifiée, et le moteur à combustion interne (VM) pouvant être relié aux deux demi-boîtes de vitesses (TG1, TG2) par l'intermédiaire d'un embrayage (K0) et de deux embrayages (K1, K2), dans lequel, en partant d'un mode de conduite purement électrique, le moteur à combustion interne (VM) est démarré par l'intermédiaire de la demi-boite de vitesses électrifiée et d'un premier rapport de vitesse enclenché dans la demi-boite de vitesses électrifiée, la puissance d'entraînement de la machine électrique (EM) étant transmise par l'intermédiaire des deux embrayages (TG1, TG2) à la demi-boite de vitesses non électrifiée, dans lequel l'embrayage (K1, K2) de la demi-boite de vitesses électrifiée est fermé, et l'embrayage (K1, K2) de la demi-boite de vitesses non électrifiée fonctionne en glissement et l'embrayage (K0) fonctionne en friction, de sorte que le moteur à combustion interne (VM) est accéléré jusqu'à la vitesse de rotation synchronisée, et l'embrayage (K0) est fermé par friction après que les deux embrayages (K1, K2) ont été fermés au moins partiellement pour les demi-boîtes de vitesses (TG1, TG2), **caractérisé en ce que** l'embrayage (K0) présente une synchronisation de blocage et est intégré dans un moyeu d'embrayage, et **en ce que** la fermeture est effectuée en même temps qu'une montée du couple de la machine électrique (EM),
et le couple de la machine électrique (EM) est augmenté selon la fermeture ou la fermeture partielle des embrayages (K1, K2, K0), et l'embrayage (K0) est ouvert après que la vitesse de rotation du moteur à combustion interne (VM) a atteint une valeur de consigne, et l'embrayage (K0) est fermé par complémentarité de forme après que les deux embrayages (K1, K2) des demi-boîtes de vitesses (TG1, TG2) ont été ouverts.
